Europäisches Patentamt

European Patent Office

Office européen des brevets

(11) Veröffentlichungsnummer: **0 261 541 B1**

# EUROPÄISCHE PATENTSCHRIFT

(45) Veröffentlichungstag der Patentschrift: 27.03.91

(51) Int. Cl.⁵: **H02H 11/00**

(21) Anmeldenummer: 87113405.2

(22) Anmeldetag: 14.09.87

(54) Schalteinrichtung für die Stromzufuhr an ein elektrisches Gerät.

(30) Priorität: 26.09.86 DE 3632796

(43) Veröffentlichungstag der Anmeldung:
30.03.88 Patentblatt 88/13

(45) Bekanntmachung des Hinweises auf die
Patenterteilung:
27.03.91 Patentblatt 91/13

(84) Benannte Vertragsstaaten:
AT CH DE FR LI SE

(56) Entgegenhaltungen:
DE-A- 3 428 441
US-A- 3 809 963

(73) Patentinhaber: **Siemens Aktiengesellschaft**
**Wittelsbacherplatz 2**
**W-8000 München 2(DE)CH DE FR LI SE**

Patentinhaber: **Siemens Aktiengesellschaft**
**Österreich**
**Siemensstrasse 88 - 92**
**A-1210 Wien(AT)AT**

(72) Erfinder: **Winterstein, Thomas, Dipl.-Ing.**
**Am Europakanal 4**
**W-8520 Erlangen(DE)**
Erfinder: **Drescher, Hans**
**Skraupstrasse 24**
**A-1210 Wien(AT)**

## Beschreibung

Die Erfindung bezieht sich auf eine Schalteinrichtung für die Stromzufuhr an ein elektrisches Gerät, wobei eine bei nichtordnungsgemäßem Betrieb des Gerätes auf die Schalteinrichtung rückwirkende Meldeeinrichtung vorgesehen ist, daß bei wirksamer Spannungsquelle durch ein manuell betätigbares Schaltelement für eine vorgegebene Zeitspanne ein Steuersignal für einen die Stromzufuhr bewerkstelligenden, durch das Steuersignal betätigbaren Schalter auslösbar ist und daß durch ein einen ordnungsgemäßen Betrieb anzeigendes, das Steuersignal ablösende Meldesignal der Meldeeinrichtung innerhalb der vorgegebenen Zeitspanne eine Selbsthaltung des Schalters bewirkbar ist.

Eine derartige Schalteinrichtung ist aus der DE-OS 34 28 441 bekannt. Bei dieser Schalteinrichtung ist mit dem Betätigen des Schaltelementes ein Kondensator über eine den Ladestrom betimmende Widerstandsanordnung aufladbar, wobei nach Ablauf der vorgegebenen Zeitspanne mit dem Überschreiten eines vorgegebenen Grenzwertes der Ladespannung des Kondensators das Steuersignal auslösbar ist. Außerdem ist die Schalteinrichtung so ausgebildet, daß mit dem Öffnen des Schaltelementes innerhalb einer vorgegebenen Wartezeit über eine den Entladestrom des Kondensators bestimmte Widerstandsanordnung dieser entladbar ist. Damit ist sichergestellt, daß eine Wiedereinschaltung nach Auslösen der Schalteinrichtung erst nach einer definierten Wartezeit möglich ist. Außerdem ist diese Schalteinrichtung von der Netzspannungsanstiegsgeschwindigkeit abhängig.

Der Erfindung liegt nun die Aufgabe zugrunde, die eingangs genannte Schalteinrichtung für die Stromzufuhr an ein elektrisches Gerät derart zu verbessern, daß eine Wiedereinschaltung nach Auslösen der Schalteinrichtung unmittelbar möglich ist, wobei die Schalteinrichtung unabhängig von der Netzspannungsanstiegsgeschwindigkeit ist.

Diese Aufgabe wird erfindungsgemäß dadurch gelöst, daß das Steuersignal von einem Monoflop generierbar ist, wobei der Eingang des Monoflops über ein erstes UNDGatter mit einem ersten und zweiten Komparator verknüpft ist, wobei der erste Komparator das Schaltelement auf Betätigung bzw. der zweite Komparator die Spannungsquelle auf Unterspannung überwacht, daß das Monoflop ein nachgeschaltetes FlipFlop setzt, das den Schalter wirksam schaltet und daß die Meldeeinrichtung über ein zweites UND-Gatter mit dem Reset-Eingang des Flip-Flops verknüpft ist, wobei der zweite Eingang des zweiten UNDGatters mit dem Ausgang des zweiten Komparators verbunden ist, wobei das Flip-Flop gesetzt wird, wenn der erste Komparator eine Befätigung des Schaltelements anzeigt und der zweite Komparator Keine Unterspannung anzeigt, und daß das Ablösendes Steuersignals durch das Meldesignal dadurch erfolgt, daß das Flip-Flop nur dann rückgesetzt wird, wenn der zweite Komparator Keine Unterspannung anzeigt und die Meldeeinrichtung einen Fehler anzeigt.

Durch diese erfindungsgemäße Ausgestaltung der Schalteinrichtung wird beim Betätigen des Schaltelementes und bei einem ordnungsgemäßen Betrieb der Spannungsquelle für eine vorbestimmte Zeitspanne, die mit einer am Monoflop angebrachten RC-Beschaltung einstellbar ist, der Schalter über ein Steuersignal wirksam geschaltet. Wenn innerhalb einer vorbestimmten Zeitspanne die Meldeeinrichtung keinen Fehler meldet, wird das Steuersignal durch ein Meldesignal abgelöst. Dadurch gelangt der Schalter in Selbsthaltung. Sobald ein Fehler auftritt und von der Meldeeinrichtung erfaßt wird, gelangt der Schalter in die Aus-Stellung. Sobald der Fehler behoben ist, kann das Schaltelement geöffnet und sofort wieder geschlossen werden, wodurch das Monoflop wieder ein Steuersignal generiert. Da zur Generierung eines Steuersignals kein Kondensator verwendet wird, der bei Wiedereinschaltung der Schalteinrichtung entladen sein muß, entfällt die Wartezeit. Somit erhält man eine von der Netzspannungsanstiegsgeschwindigkeit unabhängige Schalteinrichtung für die Stromzufuhr einer Spannungsquelle an ein elektrisches Gerät.

In einer vorteilhaften Ausführungsform der Schalteinrichtung ist als Schaltelement eine Brücke vorgesehen, die man beim Einschalten mit den vorgesehenen Klemmen verbindet. Wenn im ordnungsgemäßen Betrieb die Spannung der Spannungsquelle unterhalb eines ersten Grenzwertes absinkt, wird dies von der Meldeeinrichtung erfaßt und der Schalter am Ausgang des Flip-Flops gelangt in die Aus-Stellung. Auch der zweite Komparator der Schalteinrichtung überwacht die Spannung der Spannungsquelle auf Unterspannung. Bei einem Grenzwert, der niedriger ist als der erste Grenzwert, der die Meldeeinrichtung ansprechen läßt, geht der zweite Komparator in den Low-Zustand, wodurch außerdem der Eingang des Monoflops in den Low-Zustand übergeht. Sobald die Spannung der Spannungsquelle wieder den ordnungsgemäßen Wert erreicht, gehen der zweite Komparator und der erste Komparator in den High-Zustand und damit auch der Eingang des Monoflops, wodurch das Monoflop gestartet wird. Somit erhält man eine Ausführungsform der Schalteinrichtung, die selbsttätig wieder startet, sobald die Spannung der Spannungsquelle nach Spannungsabsenkung den ordnungsgemäßen Wert erreicht hat.

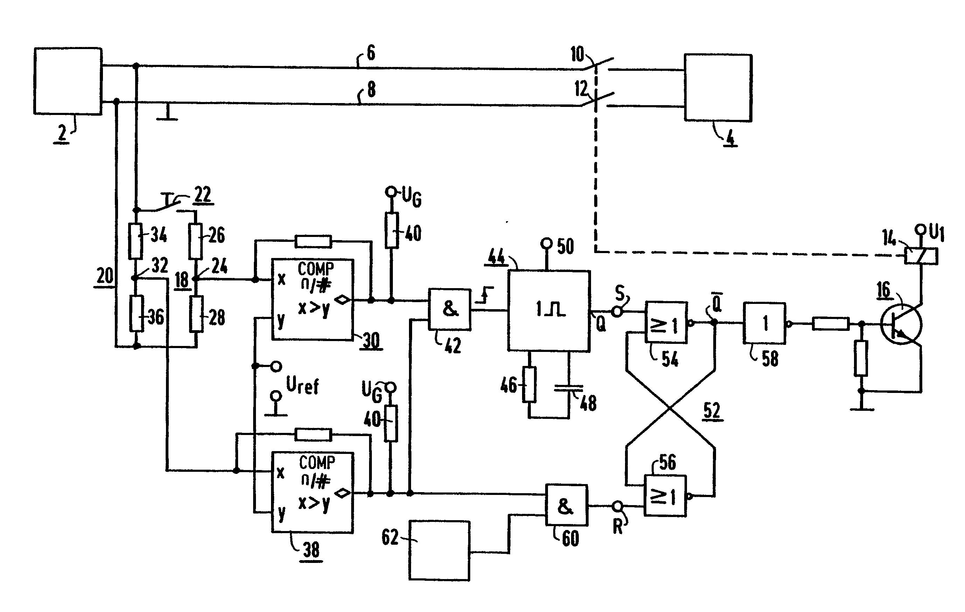

Zur weiteren Erläuterung der Erfindung wird auf die Zeichnung Bezug genommen, in der ein Ausführungsbeispiel der Schalteinrichtung für die Stromzufuhr einer Spannungsquelle an ein elektrisches Gerät schematisch veranschaulicht ist.

In der Darstellung ist eine Spannungsquelle 2 gezeigt, die zur Speisung eines elektrischen Gerätes 4 mit Gleichspannung geeignet ist. Dabei wird die Gleichspannung zweipolig über Leitungen 6 und 8 geführt, in die Schaltkontakte 10 und 12, die als Schließer eines Schalters 14 ausgebildet sind, geschaltet sind. Als Schalter 14 ist ein Relais vorgesehen, dessen einer Anschluß der Erregerwicklung mit einem Verstärkerelement 16 verbunden ist, wobei der zweite Anschluß der Erregerwicklung mit einer positiven Spannung $U_1$ verbunden ist. Außerdem hat die Schalteinrichtung zwei Spannungsteiler 18 und 20, die durch ein Schaltelement 22 elektrisch parallel geschaltet werden, wobei der eine Pol der Spannungsteiler 18 und 20 mit der Leitung 6 und der andere Pol der Spannungsteiler 18 und 20 mit der Leitung 8, die ihrerseits mit dem Nullpotential verbunden ist, verknüpft sind. Als Schaltelement 22 kann ein Taster, eine Brücke oder ein Ein-Aus-Schalter verwendet werden. Der Mittelabgriff 24 des ersten Spannungsteilers 18, bestehend aus den Widerständen 26 und 28, ist mit einem ersten Eingang x eines ersten Komparator 30 verbunden. Der Mittelabgriff 32 des zweiten Spannungsteilers 20, bestehend aus den Widerständen 34 und 36, ist mit einem ersten Eingang x eines zweiten Komparator 38 verbunden. Jeweils der zweite Eingang y der beiden Komparatoren 30 und 38 sind mit einer Referenzspannungsquelle $U_{ref}$ verbunden. Die Ausgänge der Komparatoren 30 und 38 sind einerseits jeweils über einen sogenannten Pull-up-Widerstand 40 mit einer Spannungsquelle $U_G$ und andererseits mit einem ersten UND-Gatter 42 verbunden. Als Spannungsquelle $U_G$ ist eine Gleichspannungsquelle mit einer Spannungsamplitude von beispielsweise 5 Volt vorgesehen. Dem ersten UND-Gatter 42 ist ein Monoflop 44 nachgeschaltet. Die Zeitspanne $t_M$, in der das Monoflop, nachdem es gestartet wurde, im High-Zustand verharrt, ist durch den Beschaltungswiderstand 46 und den Beschaltungskondensator 48 einstellbar. Außerdem kann bei diesem Monoflop 44 das High-Signal mit Hilfe des Reset-Eingangs 50 unterdrückt werden. Der Ausgang Q des Monoflops 44 ist mit dem Setz-Eingang S eines Flip-Flops 52, bestehend aus zwei NOR-Gattern 54 und 56, verknüpft, dessen Ausgang $\overline{Q}$ über einen Inverter 58 mit dem Verstärkerelement 16 verbunden ist. Der Reset-Eingang R des Flip-Flops 52 ist mit dem Ausgang eines zweiten UND-Gatters 60 verknüpft, dessen erster Eingang mit dem Ausgang des zweiten Komparators 30 und dessen zweiter Eingang mit einem Ausgang einer Meldeeinrichtung 62 verknüpft ist. Diese Meldeeinrichtung 62 enthält Spannungsüberwacher, die dem Gerät 4 zugeordnet sind. Die Meldeeinrichtung 62 überwacht mit dem Wirksamschalten des Gerätes 4 die Betriebsspannungen an verschiedenen festgelegten Meßpunkten des Gerät es 4. Sofern sich die zu erwartenden Betriebsspannungen in einem vorbestimmten Toleranzband befinden, wird von der Meldeeinrichtung 62 als Meldesignal ein Low-Signal dem zweiten UND-Gatter 60 zugeführt. Sobald eine Betriebsspannung sich außerhalb des vorgesehenen Toleranzbandes befindet, wird dem zweiten UND-Gatter 60 von der Meldeeinrichtung 62 als Meldesignal ein Fehlersignal zugeführt. Als Fehlersignal ist ein High-Signal vorgesehen.

Wenn nun zu einem Zeitpunkt t das Schaltelement 22 betätigt wird und die Spannung der Spannungsquelle 2 den ordnungsgemäßen Wert hat, so gehen die beiden Komparatoren 30 und 38 vom Low-Zustand in den High-Zustand und erzeugen somit am Ausgang des ersten UND-Gatters 42 eine positive Flanke, wodurch das Monoflop 44 gestartet wird. Durch den Beschaltungswiderstand 46 und den Beschaltungskondensator 48 ist eine vorbestimmte Zeitspanne $t_M$ eingestellt. Während dieser Zeitspanne $t_M$ verharrt das Monoflop 44 im High-Zustand. Mit Ablauf der Zeitspanne $t_M$, d.h. zum Zeitpunkt $t+t_M$, geht der Ausgang Q des Monoflops 44 unabhängig vom Eingangssignal in den Low-Zustand. Durch das Starten des Monoflops 44 erscheint an seinem Ausgang Q ein High-Signal, wodurch der Setz-Eingang S des Flip-Flops 52 gesetzt wird. An seinem Ausgang $\overline{Q}$ erhält man ein Low-Signal, das mit Hilfe des Inverters 58 ein Schalten des Verstärkerelementes 16 bewirkt. Dieses bewirkt ein Schalten des Schalters 14, wodurch die Schaltkontakte 10 und 12 geschlossen werden und das Gerät 4 eingeschaltet wird. Mit Wirksamschalten des Gerätes 4 werden die Betriebsspannungen überwacht, wodurch im Einschaltaugenblick die Meldeeinrichtung als Meldesignal ein Fehler-Signal abgibt, d.h. am zweiten Eingang des zweiten UND-Gatters 60 erscheint ein High-Signal. Da der zweite Komparator 38 am Ausgang ein High-Signal aufweist, erscheint am Ausgang des zweiten UND-Gatters 60 und damit am Reset-Eingang R des Flip-Flops 52 ein High-Signal. Dadurch ändert sich nicht der Zustand am Ausgang $\overline{Q}$ des Flip-Flops 52. Wenn innerhalb der vorbestimmten Zeitspanne $t_M$ die erwarteten Betriebsspannungen innerhalb eines vorgegebenen Toleranzbandes sich befinden, wird von der Meldeeinrichtung 62 ein Low-Signal an den zweiten Eingang des zweiten UND-Gatters 60 geführt, wodurch der Reset-Eingang R des Flip-Flops 52 in den Low-Zustand geht. Dadurch bleibt am Ausgang $\overline{Q}$ jedoch der Low-Zustand erhalten. Nachdem die Zeitspanne $t_M$ abgelaufen ist, erscheint am Ausgang Q des Monoflops 44 ein Low-Signal, wodurch der Setz-Eingang S des Flip-Flops 52 in den Low-Zustand geht. Dadurch erscheint am Ausgang $\overline{Q}$ des Flip-Flops 52 der vorangegangene gespeicherte Zustand, nämlich ein Low-Signal. Damit ist der Schalter 14 in die Selbsthaltung gegangen. Sobald ein Fehler auftritt, geht der Ausgang der Meldeeinrichtung 62 und damit der zweite Eingang des zweiten UND-Gatters 60 in High-Zustand, wodurch der Reset-Eingang R des Flip-Flops 52 ebenfalls in den High-Zustand geht. Damit erhält man am Ausgang $\overline{Q}$ des Flip-Flops 52 ein High-Signal, wodurch das Verstärkerelement 16 sperrt und der Schalter 14 in die Aus-Stellung gelangt. Sobald der Fehler behoben ist, kann durch Betätigen des Schaltelementes 22 das Gerät 4 wieder wirksam geschaltet werden.

Wenn als Fehler ein Spannungseinbruch der Spannungsquelle 2 bei ordnungsgemäßem Betrieb auftritt und als Schaltelement 22 eine Brücke bzw. ein Ein-Aus-Schalter vorgesehen ist, geht der Schalter 14 infolge der Fehlermeldung, nämlich ein High-Signal am Ausgang der Meldeeinrichtung 62, in den Aus-Zustand. Der zweite Komparator 38 erfaßt ebenfalls die Unterspannung, wodurch am Ausgang ein Low-Signal erscheint. Dadurch geht der Ausgang des ersten UND-Gatters 42 ebenfalls in einen Low-Zustand. Sobald die Spannung der Spannnungsquelle 2 wieder den ordnungsgemäßen Zustand erreicht hat, erscheint am Ausgang des zweiten Komparators 38 ein High-Signal und durch die Brücke als Schaltelement 22 erscheint ebenfalls am Ausgang des ersten Komparators 30 ein High-Signal. Dadurch geht der Ausgang des ersten UND-Gatters 42 in einen High-Zustand, wodurch mit der positiven Spannungsflanke das Monoflop 44 gestartet wird. Somit erhält man eine Schalteinrichtung, die bei Unterspannung und in Verbindung einer Brücke als Schaltelement 22 selbsttätig das Gerät 4 wieder wirksamschaltet.

**Ansprüche**

1. Schalteinrichtung für die Stromzufuhr einer Spannungsquelle (2) an ein elektrisches Gerät (4), wobei eine bei nichtordnungsgemäßem Betrieb des Gerätes auf die Schalteinrichtung rückwirkende Meldeeinrichtung (62) vorgesehen ist, daß bei wirksamer Spannungsquelle (2) durch ein manuell betätigbares Schaltelement (22) für eine vorgegebene Zeitspanne ($t_M$) ein Steuersignal für einen die Stromzufuhr bewerkstelligenden, durch das Steuersignal betätigbaren Schalter (14) auslösbar ist und daß durch ein einen ordnungsgemäßen Betrieb anzeigendes, das Steuersignal ablösende Meldesignal der Meldeeinrichtung (62) innerhalb der vorgegebenen Zeitspanne ($t_M$) eine Selbsthaltung des Schalters (14) bewirkbar ist, **dadurch gekennzeichnet,** daß das Steuersignal von einem Monoflop (44) generierbar ist, wobei der Eingang des Monoflops (44) über ein erstes UND-Gatter (42) mit einem ersten und zweiten Komparator (30, 38) verknüpft ist, wobei der erste Komparator (30) das Schaltelement auf Betätigung bzw. der zweite Komparator (38) die Spannungsquelle (2) auf Unterspannung überwacht, daß das Monoflop (44) ein nachgeschaltetes Flip-Flop (52) setzt, das den Schalter (14) wirksam schaltet und daß die Meldeeinrichtung (62) über ein zweites UND-Gatter (60) mit dem Reset-Eingang (R) des Flip-Flops (52) verknüpft ist, wobei der zweite Eingang des zweiten UND-Gatters (60) mit dem Ausgang des zweiten Komparators (38) verbunden ist, wobei das Flip-Flop (52) gesetzt wird, wenn der erste Komparator (30) eine Befätigung des Schaltelements (22) anzeigt und der zweite Komparator (38) Keine Unterspannung anzeigt, und daß das Ablösen des Steuersignals durch das Meldesignal dadurch erfolgt, daß das Flip-Flop (52) nur dann rückgesetzt wird, wenn der zweite Komparator (38) Keine Unterspannung anzeigt und die Meldeeinrichtung (62) einen Fehler anzeigt.

2. Schalteinrichtung nach Anspruch 1, **dadurch gekennzeichnet,** daß als Schaltelement (22) eine Brücke vorgesehen ist.

3. Schalteinrichtung nach Anspruch 1, **dadurch gekennzeichnet,** daß der Ausgang ($\overline{Q}$) des Flip-Flops (52) über einen Inverter (58) und ein Verstärkerelement (16) mit dem Schalter (14) verbunden ist.

4. Schalteinrichtung nach Anspruch 1, **dadurch gekennzeichnet,** daß als Flip-Flop (52) ein RS-Flip-Flop vorgesehen ist, das aus zwei NOR-Gattern (54, 56) aufgebaut ist.

5. Schalteinrichtung nach Anspruch 1, **dadurch gekennzeichnet,** daß als Schalter (14) ein elektromechanisches Relais verwendet ist.

**Claims**

1. Switching device for switching the supply of power of a voltage source (2) to an electrical unit (4), with asignalling device (62) being provided, which device, in the case of irregular operation of the unit, acts back to the switching device, that with effective voltage source (2) a control signal for a switch (14), which realizes the supply of power and can be actuated by means of the control signal, can be triggered by means of a manually operable switching element (22) for a preset time duration ($t_m$) and that latching of the switch (14) can be effected within the preset time duration ($t_M$) by means of a status signal of the signalling device (62), indicating regular operation and releasing the control signal, characterised in that the control signal can be generated by a monostable multivibrator (44), with the input of the monostable multivibrator (44) being linked by way of a first AND-gate (42) to a first and a second comparator (30, 38), the first comparator (30) monitoring the switching element for actuation and the second comparator (38) monitoring the voltage source (2) for undervoltage, in that the monostable multivibrator (44) sets a subsequently connected flip-flop (52) which switches the switch (14) so as to make it effective and in that the signalling device (62) is linked by way of a second AND-gate (60) to the reset input (R) of the flip-flop (52), the second input of the second AND-gate (60) being connected to the output of the second comparator (38), the flip-flop (52) being set when the first comparator (30) indicates an actuation of the switching element (22) and the second comparator (38) indicates no undervoltage and in that the release of the control signal by means of the status signal occurs in that the flip-flop (52) is only reset if the second comparator (38) indicates no undervoltage and the signalling device (62) indicates an error.

2. Switching device according to claim 1, characterised in that a bridge is provided as switching element (22).

3. Switching device according to claim 1, characterised in that the output (Q) of the flip-flop (52) is connected to the switch (14) by way of an inverter (58) and an amplifier element (16).

4. Switching device according to claim 1, characterised in that an RS-flip-flop is provided as flip-flop (52) which is composed of two NOR-gates (54, 56).

5. Switching device according to claim 1, characterised in that an electromechanical relay is used as switch (14).

## Revendications

1. Dispositif de coupure pour l'alimentation en courant d'un appareil électrique (4) à partir d'une source de tension (2), dans lequel il est prévu un dispositif de signalisation (62), qui rétroagit sur le dispositif de coupure dans le cas d'un fonctionnement incorrect de l'appareil, et dans lequel lorsque la source de tension (2) est active, un élément de coupure (22) pouvant être actionné manuellement permet d'envoyer, pendant un intervalle de temps prédéterminé ($t_M$), un signal de commande pour un interrupteur (14) exécutant l'alimentation en courant et pouvant être actionné par le signal de commande, dans lequel un maintien automatique de l'interrupteur (14) peut être déclenché au moyen d'un signal de signalisation du dispositif de signalisation (62), qui indique un fonctionnement correct et interrompt le signal de commande, pendant l'intervalle de temps prédéterminé ($t_M$), caractérisé par le fait que le signal de commande peut être produit par un multivibrateur monostable (44), dont l'entrée est réunie par l'intermédiaire d'une première porte ET (42) à des premier et second comparateurs (38), le premier comparateur (30) contrôlant l'actionnement de l'élément de coupure tandis que le second comparateur (38) contrôle une baisse de la tension de la source de tension (2), que le multivibrateur monostable (44) positionne un multivibrateur bistable (52) branché en aval, qui ferme l'interrupteur (14), et que le dispositif de signalisation (62) est réuni par l'intermédiaire d'une seconde porte ET (60) à l'entrée de remise à l'état initial (R) du multivibrateur bistable (52), la seconde entrée de la seconde porte ET (60) étant reliée à la sortie du second comparateur (38), le multivibrateur bistable (52) étant positionnée lorsque le premier comparateur (30) indique un actionnement de l'élément de coupure (22) et que le second comparateur (38) n'indique aucune baisse de tension, et que l'interruption du signal de commande par le signal de signalisation est réalisée grâce au fait que le multivibrateur bistable (52) n'est ramené à l'état initial que lorsque le second comparateur (38) n'indique aucune baisse de tension et que le dispositif de signalisation (62) indique un défaut.

2. Dispositif de coupure suivant la revendication 1, caractérisé par le fait qu'un pont est prévu comme élément de coupure (22).

3. Dispositif de coupure suivant la revendication 1, caractérisé par le fait que la sortie ('Q) du multivibrateur bistable (52) est reliée par l'intermédiaire d'un inverseur (58) et d'un élément amplificateur (16) à l'interrupteur (14).

4.  Dispositif de coupure suivant la revendication 1, caractérisé par le fait qu'il est prévu, comme multivibrateur bistable (52), un multivibrateur bistable de type RS, qui est constitué de deux portes NON-OU (54,56).

5.  Dispositif de commutation suivant la revendication 1, caractérisé par le fait qu'on utilise comme interrupteur (14), un relais électromagnétique.